# EUROPEAN PATENT APPLICATION

(11) **EP 4 218 980 A1**
(43) Date of publication of application: **02.08.2023**
(21) Application number: 22154634.4
(22) Date of filing: 01.02.2022
(51) Int. Cl.: B01D 15/22, B01D 15/38, B01D 63/08, B01D 63/10, B01J 20/28, B01J 20/286, B01J 20/32, G01N 30/02, G01N 30/60

(54) **AFFINITY CHROMATOGRAPHY DEVICES CONTAINING A HEAT TREATED FIBRILLATED POLYMER MEMBRANE FOR THE SEPARATION OF MRNA AND VIRAL VECTORS FROM AN AQUEOUS MIXTURE**

(71) Applicant: W.L. Gore & Associates Inc., Newark, DE 19711 (US)
(72) Inventor: MABE, Kevin J., Newark, Delaware 19711 (US); MCMANAWAY, Michael C., Newark, Delaware 19711 (US); KIM, EuiJun, Newark, Delaware 19711 (US); VANWOORHEES, Eric, Newark, Delaware 19711 (US); CLINGER, Jared M., Newark, Delaware 19711 (US); CASSEL, Jeffrey T., Newark, Delaware 19711 (US); GUNZEL, Edward C., Newark, Delaware 19711 (US)
(74) Representative: HGF

(57) **Abstract**

The present disclosure is directed to affinity chromatography devices that include a fibrillated heat treated polymer membrane that contains therein inorganic particles that separate a targeted molecule from an aqueous mixture containing the targeted molecule. The targeted molecule includes proteins, antibodies, viral vectors, nucleic acids, and combinations thereof. The inorganic particles may be spherical or irregular in shape. A blend or combination of various sizes and/or shapes of inorganic particles may be utilized. An affinity ligand may be bonded to the inorganic particles and/or to the fibrillated polymer membrane. The affinity chromatography device may be repeatedly used and may be cleaned between uses. In some embodiments, the affinity chromatography devices separate nucleic acids (e.g., mRNA) and viral vectors (e.g., adeno-associated virus) from the aqueous mixture. Manifolds containing multiple affinity chromatography devices in a parallel configuration and multiple manifolds in a parallel configuration are also disclosed.

## Description

### FIELD

The present disclosure relates generally to affinity chromatography, and more specifically, to an affinity chromatography device that includes a fibrillated heat treated polymer membrane containing therein inorganic particles. At least one of the fibrillated heat treated polymer membrane and the inorganic particles has covalently bound thereto an affinity ligand that reversibly binds to a targeted molecule. In some embodiments, the targeted molecule is a viral vector or a nucleic acid. Manifolds containing multiple affinity chromatography devices and manifolds in a parallel configuration are also disclosed.

### BACKGROUND

Chromatographic methods generally are used to separate and/or purify molecules of interest such as proteins, nucleic acids, and polysaccharides from a mixture. Affinity chromatography specifically involves passing the mixture over a matrix having a ligand specific (i.e. a specific binding partner) for the molecule of interest bound to it. Upon contacting the ligand, the molecule of interest is bound to the matrix and is therefore retained from the mixture. Affinity chromatography provides certain advantages over other types of chromatography. For example, affinity chromatography provides a purification method that can isolate a target protein from a mixture of the target protein and other biomolecules in a single step in high yield.

Despite the advantages of current affinity chromatography devices, there exists a need in the art for a chromatography device that can be used at shorter residence times than conventional devices while providing the same binding capacity or better binding capacities than current offerings and that is re-useable.

### SUMMARY

In one Aspect ("Aspect 1"), an article includes an affinity chromatography device that includes a fluid inlet, a fluid outlet connected to the fluid inlet, a fibrillated heat treated polymer membrane positioned between the fluid inlet and fluid outlet and containing therein inorganic particles and a nominal particle size, and a housing encompassing the fluid inlet, the fluid outlet and the fibrillated heat treated polymer membrane, where at least one of the fibrillated heat treated polymer membrane and the inorganic particles has covalently bonded thereto an affinity ligand selected from a polysaccharide or an oligosaccharide that reversibly binds to a viral vector.

According to another Aspect ("Aspect 2") further to Aspect 1, the inorganic particles have a spherical shape, an irregular shape, or a combination thereof.

According to another Aspect ("Aspect 3") further to Aspect 1, the nominal particle size is selected from about 0.1 microns, about 0.5 microns, about 1.0 micron, about 5 microns, about 10 microns, about 15 microns, about 20 microns, about 25 microns, and combinations thereof.

According to another Aspect ("Aspect 4") further to Aspect 1, the inorganic particles have a spherical shape, an irregular shape, or a combination thereof

According to another Aspect ("Aspect 5") further to Aspect 4, where the inorganic particles are selected from silica, zeolites, hydroxyapatite, metal oxides and combinations thereof.

According to another Aspect ("Aspect 6") further to Aspect 1, where the fibrillated heat treated polymer membrane has a wound configuration or a stacked configuration.

According to another Aspect ("Aspect 7") further to Aspect 1, where the fibrillated heat treated polymer membrane comprises a fibrillated polytetrafluoroethylene membrane, a fibrillated modified polytetrafluoroethylene membrane, a fibrillated tetrafluoroethylene copolymer membrane, or a fibrillated polyethylene membrane.

According to another Aspect ("Aspect 8") further to Aspect 1, where the affinity ligand is selected from Protein A, Protein G, Protein L, human Fc receptor protein, antibodies, polysaccharides, oligonucleotides, and combinations thereof.

According to another Aspect ("Aspect 9") further Aspect 1, where the nominal particle size is selected from about 5 microns, about 10 microns, about 15 microns, about 20 microns, and combinations thereof.

According to another Aspect ("Aspect 10") further to Aspect 1, where the inorganic particles are spherical particles and have a nominal particle size from about 5 microns to about 20 microns, and where a particle size distribution has a D90/D10 less than or equal to 3.

According to another Aspect ("Aspect 11") further to Aspect 1, including a dynamic binding capacity (DBC) of at least 35 mg/ml at a residence time of 20 seconds.

According to another Aspect ("Aspect 12") further to Aspect 1, including a cycling durability of at least 100 cycles at an operating pressure less than 0.3 MPa.

According to another Aspect ("Aspect 13") further to Aspect 1, where an inner intermediate material is circumferentially positioned on an outer surface of a core and wherein the fibrillated heat treated polymer membrane is circumferentially positioned on the inner intermediate material.

According to another Aspect ("Aspect 14") further to Aspect 1, including an outer intermediate material circumferentially positioned on the heat treated fibrillated polymer membrane.

According to another Aspect ("Aspect 15") further to Aspect 1, where the inner intermediate material and the outer intermediate material are selected from a porous fluoropolymer film, a porous non-fluoropolymer film, a porous non-woven material and a porous woven material.

According to another Aspect ("Aspect 16") a manifold includes at least two of the affinity chromatography devices of claim 1 arranged in a parallel configuration.

According to another Aspect ("Aspect 17") further to Aspect 16, where the manifold is contained within a housing.

According to another Aspect ("Aspect 18") an article includes a fluid inlet, a fluid outlet, a fibrillated heat treated polymer membrane containing therein inorganic particles having a nominal particle size, a housing surrounding the fluid inlet, the fluid outlet, and fibrillated heat treated polymer membrane, a first end cap positioned at a first end of the housing, a second end cap positioned at a second end of the housing where at least one of the fibrillated heat treated polymer membrane and the inorganic particles has covalently bonded thereto an oligonucleotide that reversibly binds to a nucleic acid.

According to another Aspect ("Aspect 19") further to Aspect 18, where the nucleic acid is mRNA.

According to another Aspect ("Aspect 20") further to Aspect 19, where the oligonucleotide is selected from oligo T, oligo T20, oligo DT, oligo DT20 and combinations thereof.

According to another Aspect ("Aspect 21") further to Aspect 18, where the inorganic particles have a spherical shape, an irregular shape, or a combination thereof.

According to another Aspect ("Aspect 22") further to Aspect 21, where the inorganic particles are selected from silica, zeolites, hydroxyapatite, metal oxides and combinations thereof.

According to another Aspect ("Aspect 23") further to Aspect 18, where the fibrillated heat treated polymer membrane includes at least one of a fibrillated heat treated polytetrafluoroethylene membrane, a fibrillated heat treated modified polytetrafluoroethylene membrane, a fibrillated heat treated tetrafluoroethylene copolymer membrane, or a fibrillated heat treated polyethylene membrane.

According to another Aspect ("Aspect 24") further Aspect 18, where the nominal particle size is selected from about 5 microns, about 10 microns, about 15 microns, about 20 microns, and combinations thereof.

According to another Aspect ("Aspect 25") further to Aspect 18, where the fibrillated polymer membrane has a wound configuration or a stacked configuration.

According to another Aspect ("Aspect 26") a manifold includes at least two of the affinity chromatography devices of claim 18 arranged in a parallel configuration.

According to another Aspect ("Aspect 27") further to Aspect 26, where the manifold is enclosed within a housing.

According to another Aspect ("Aspect 28") a device includes a first manifold and a second manifold in a parallel configuration where each of the first manifold and the second manifold includes at least two of the articles of claim 18.

According to another Aspect ("Aspect 29") where the first manifold and the second manifold are enclosed within a housing.

### BRIEF DESCRIPTION OF THE DRAWINGS

The accompanying drawings are included to provide a further understanding of the disclosure and are incorporated in and constitute a part of this specification, illustrate embodiments, and together with the description serve to explain the principles of the disclosure.
FIG. 1 is an exploded view of a chromatography device containing a wound membrane assembly including a fibrillated heat treated polymer membrane containing therein spherical inorganic polymer particles according to at least one embodiment;
FIG. 2 is a cross section of a chromatography device depicting the outer flow channel and inner flow channel according to at least one embodiment in accordance with at least one embodiment;
FIG. 3 is a schematic illustration of a cross-section of a chromatography device containing a wound membrane assembly having a polymer membrane and a thermoplastic polymer in a solid state in accordance with at least one embodiment;
FIG. 4 is an exploded view of a chromatography device containing a stacked membrane assembly including a fibrillated heat treated polymer membrane containing therein spherical inorganic particles in accordance with at least one embodiment;
FIG. 5 is a schematic illustration of a front view of a manifold containing two chromatography devices arranged in a parallel configuration;
FIG. 6 is a schematic illustration of a top view of the manifold of FIG. 5;
FIG. 7 is a schematic illustration of a perspective view of a manifold containing four chromatography devices arranged in a parallel configuration;
FIG. 8 is a schematic illustration of a top view of the manifold of FIG. 7.
FIG. 9 is a schematic illustration of a front view of two manifolds arranged in a parallel configuration; and
FIG. 10 is a schematic illustration of a top view of the two manifolds of FIG. 9.

### DETAILED DESCRIPTION

Persons skilled in the art will readily appreciate that various aspects of the present disclosure can be realized by any number of methods and apparatus configured to perform the intended functions. It should also be noted that the accompanying figures referred to herein are not necessarily drawn to scale, but may be exaggerated to illustrate various aspects of the present disclosure, and in that regard, the figures should not be construed as limiting. It is to be understood that, as used herein, the term "on" is meant to denote an element, such as a polymer membrane, is directly on another element or intervening elements may also be present.

It is to be appreciated that the phrases "spherical particles", "spherical inorganic particles", and "inorganic particles having a spherical shape" may be interchangeably herein. Additionally, the term "spiral wound membrane assembly" is meant to include both the fibrillated heat treated polymer membrane alone and the fibrillated heat treated polymer membrane with the intermediate material. Further, the term "stacked membrane assembly" is meant to include both the fibrillated heat treated polymer membrane alone and the fibrillated heat treated polymer membrane with one or more intermediate material(s). In addition, the terms "affinity chromatography device" and "chromatography device" may be used interchangeably herein.

The present disclosure is directed to affinity chromatography devices that include a fibrillated heat treated polymer membrane containing therein inorganic particles that separate a targeted molecule from an aqueous mixture containing the targeted molecule. In some embodiments, a blend or combination of various sizes and/or shapes of the inorganic particles is utilized. A nominal particle size of the inorganic particles is from about 0.1 microns to about 25 microns. An affinity ligand may be bonded to the inorganic particles and/or to the fibrillated heat treated polymer membrane. The affinity chromatography device may be repeatedly used and may be cleaned between uses. In some embodiments, the affinity chromatography devices separate nucleic acids (e.g., mRNA) and viral vectors (e.g., adeno-associated virus) from an aqueous mixture (e.g., biological sample). It is to be appreciated that the term "about" as used herein denotes +/- 10% of the designated unit of measure.

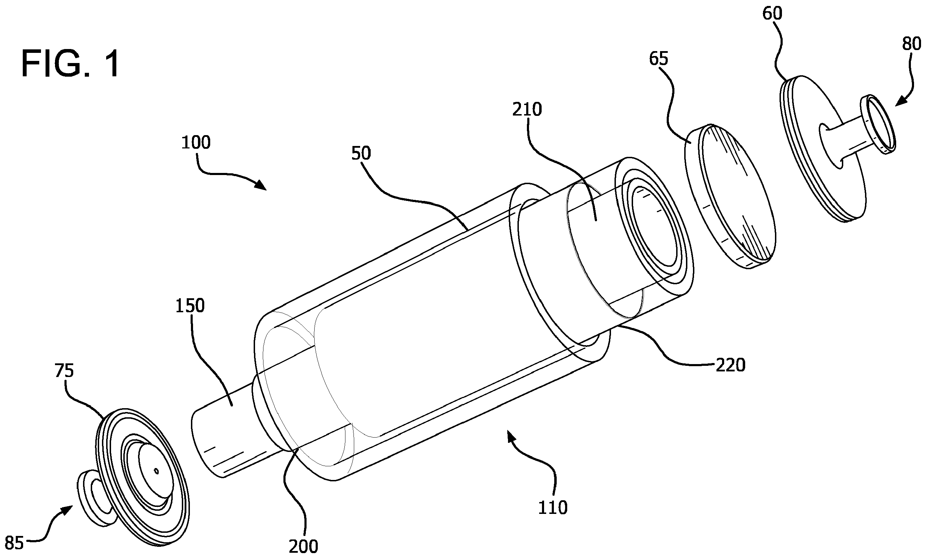

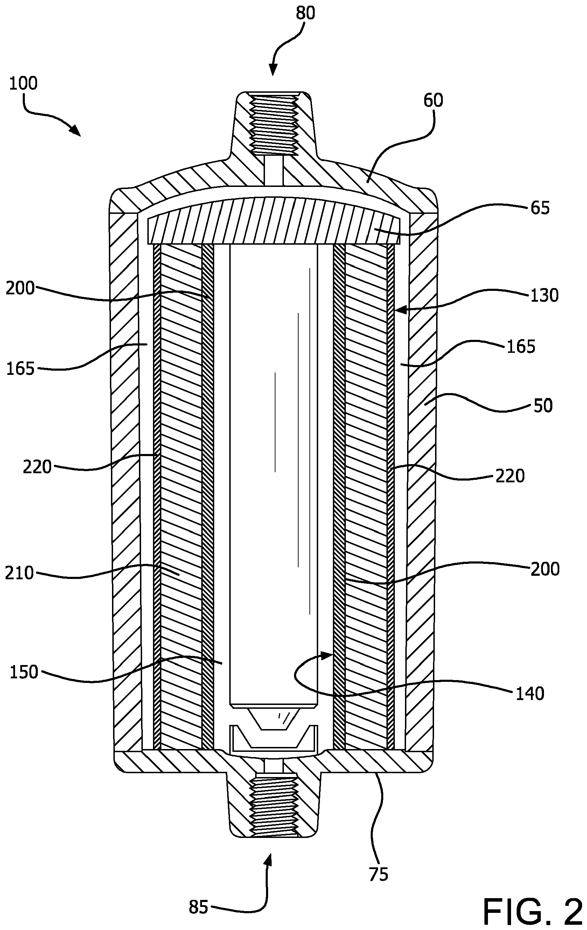

Looking at FIGS. 1 and 2, a wound chromatography device 100 is depicted. In forming the chromatography device 100, at least one fibrillated heat treated polymer membrane containing therein inorganic particles is wrapped around a cylindrical core 150. The inorganic particles may have a spherical shape, an irregular shape, or a combination thereof. Fibrillated, as used herein, refers to the inclusion of fibrils in a polymer membrane, such as, for example, a membrane having a microstructure characterized by nodes interconnected by fibrils where voids are the spaces between the nodes and fibrils. "Heat treatment", as used herein, is meant to describe the end product of a heat treating step whereby the fibrillated polymer membrane is subjected to a temperature above its melting point for a designated period of time.

In some embodiments, at least one inner intermediate material 200 may be circumferentially positioned against (e.g., wound around) the core 150 to a desired width or a pre-designated amount. A fibrillated heat treated polymer membrane containing inorganic particles therein 210 is then wound around the core 150 over the inner intermediate material 200 to a desired width or a pre-designated amount, and an outer layer of at least one outer intermediate material 220 is circumferentially positioned on (*e.g.*, wound around) the fibrillated heat treated polymer membrane 210 to a desired width or a pre-designated amount. Herein, the combination of the inner intermediate material 200, the fibrillated heat treated polymer membrane 210, and the outer intermediate material 220 will be referred to as the "wound membrane assembly". The "wound membrane assembly", in some embodiments, may include a fibrillated heat treated polymer membrane and an inner intermediate material(s), a fibrillated heat treated polymer membrane and an outer intermediate material(s), as well as any combination of polymers and/or polymer and intermediate material wrapped around a core. The cylindrical core 150 may have a hollow or solid interior. In either instance, the core 150 contains a solid outer wall so that an aqueous mixture flowing through the chromatography device 100 flows within an inner flow channel formed of the inner intermediate material(s), which is discussed in detail below. The use of a hollow core 150 reduces the amount of material used to form the core 150, reduces the weight of the device 100, and reduces manufacturing costs.

The membrane assembly 110 and central core 150 may be positioned within a housing member 50. In some embodiments, the housing member 50 is cylindrical. In the embodiment depicted in FIGS. 1 and 2, the outer intermediate material(s) 220 forms an outer flow channel 130 and the inner intermediate material(s) 200 form an inner flow channel 140. It is to be appreciated that the intermediate material(s) 200, 220 in the embodiments described herein may be different or they may be the same. Additionally, two or more intermediate materials may be used to form one or both of the outer flow channel 130 and the inner flow channel 140. In use, an aqueous mixture flows into the inlet 80 positioned within inlet cap 60 where the mixture flows over the distributor cap 65 and is directed towards the outer flow channel formed by the outer intermediate material(s) 220. The distributor cap 65 directs the aqueous mixture 90 degrees from the feed direction towards the outer flow channel 130 (*i.e*., intermediate material(s) 220). This redirection promotes a more uniform flow of the aqueous mixture into the outer flow channel 130. The outer intermediate layers forming 220 forming the outer flow channel 130 is located between the housing member 50 and the wound polymer membrane 210. The distributor cap 65 may be a polyolefin or coated with a polyolefin. It is to be appreciated that the aqueous mixture flows along an outer channel gap 165 and connects with the inner flow channel 130.

The aqueous mixture flows through the outer flow channel 130 (i.e., outer intermediate material(s) 220) across the wound polymer membrane 210 in a normal direction (*e.g*., a normal flow). As the aqueous mixture is passed in a normal flow from the outer flow channel 130 (i.e., outer intermediate material(s) 220) and across the wound polymer membrane 210, the affinity ligand reversibly binds to the targeted molecule, thereby effectively removing it from the aqueous mixture. The aqueous mixture then enters the inner flow channel 140 (*i.e*., inner intermediate material(s) 200) located between the solid outer wall of the central core 150 and the wound polymer membrane 210

The aqueous mixture then is redirected at the bottom of the inner flow channel 140 by an outlet cap 75. The aqueous mixture then flows out of the chromatography device 100 through outlet 85 located within the outlet cap 75. It is to be appreciated that the diameter and/or height of the central core 150 (and/or the width and/or height of the fibrillated heat treated polymer membrane and/or intermediate material(s)) can be adjusted to achieve a larger volume without negatively impacting performance of the device. Additionally, the targeted molecule may be removed from the affinity ligand, for example, by passing a fluid that has a lower pH through the chromatography device, or by any manner known by those of ordinary skill in the art to remove a bound targeted molecule, such as, for example, a nucleic acid or a viral vector.

The intermediate material(s) 200, 220 is not particularly limiting so long as the aqueous mixture is able to flow therethrough. Some non-limiting examples of suitable intermediate materials include, but are not limited to, a porous fluoropolymer film or a porous non-fluoropolymer film (e.g., a porous polypropylene or other porous polyolefin film), a porous non-woven material, or a porous woven material. In some embodiments, the wound membrane assembly incudes an integrated inlet end cap 60 at one end of the core 150 and an integrated outlet end cap 75 at an opposing end of the core 150 to form an integrated, reusable chromatography device.

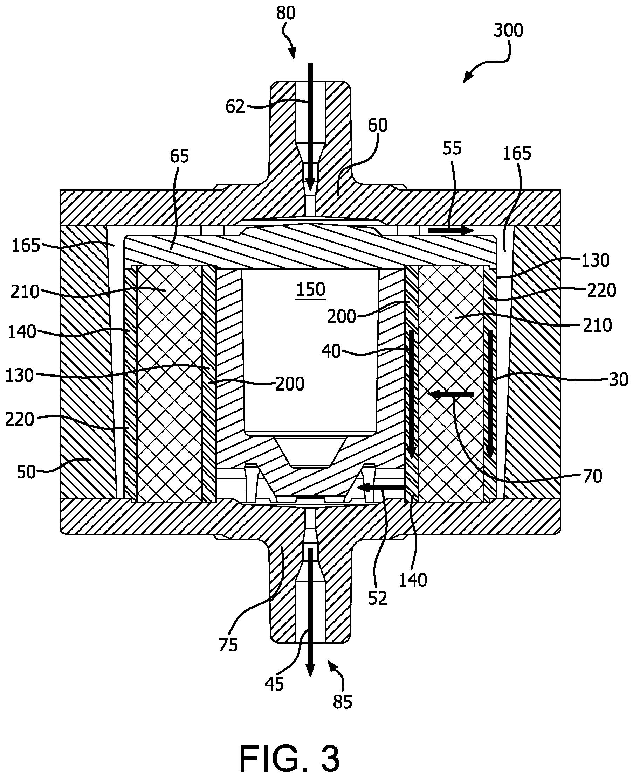

The function of the chromatography device 300 depicted in FIG. 3 is substantially similar to the chromatography device 100 depicted in FIG. 2. For instance, an aqueous mixture is introduced into the chromatography device 300 via the inlet 80 positioned within inlet cap 60 in the direction of arrow 62. The aqueous mixture is directed from the feed direction by the distributor cap 65. For ease of description, the aqueous mixture may flow in the direction depicted by arrow 55 towards the outer flow channel 130 (which may be formed of outer intermediate material(s) 220). The aqueous mixture flows along an outer channel gap 165 and connects with the inner flow channel 140 where it flows in the direction of arrow 30. The aqueous mixture flows across the wound polymer membrane 210 in a normal direction (e.g., a normal flow) as shown by arrow 70 from the inner flow channel 130 to the inner flow channel 140. As the aqueous mixture passes through the wound polymer membrane 210, the affinity ligand reversibly binds to the targeted molecule (e.g., a nucleic acid or a viral vector). It is to be appreciated that the inner flow channel 140 may be formed of inner intermediate material(s) 200.

The aqueous mixture free of the targeted molecule flows down the inner flow channel 140 in the direction depicted by arrow 40. The aqueous mixture is redirected at the bottom of the inner flow channel 140 the towards the central portion of the chromatography device 300 as depicted by arrow 52. The aqueous mixture free of the targeted molecule flows out of the chromatography device 300 through outlet 85 positioned within the outlet end cap 75 in the direction of arrow 45.

The total number of fibrillated polymer membrane layers present in the wound membrane assembly is not particularly limited, and depends on the desired end use and/or desired mass transit flow within the membrane assembly. The wound membrane assembly may include 2, 3, 4, 5, 6, 7, 8, 9, 10, 11, 12, 13, 14, 15, 16, 17, 18, 19, or 20 (or more) total polymer membrane layers. It is to be appreciated that hundreds or even thousands of polymer membrane layers may be present in the stacked membrane assembly. In addition, the fibrillated polymer membrane present in the wound membrane assembly may have a single layer thickness from about 1 micron to about 10,000 microns, from about 100 microns to about 5,000 microns, from about 500 microns to about 3,000 microns, or from about 650 microns to about 1,000 microns. As used herein, the term "thickness" is the direction of the fibrillated polymer membrane normal to the length area of the fibrillated polymer membrane.

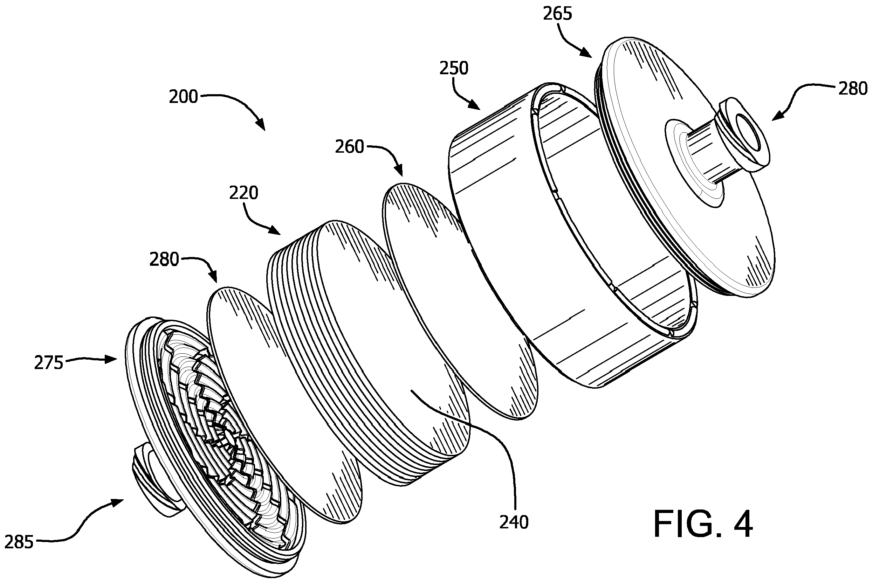

In other embodiments, such as is depicted generally in FIG. 4, the chromatography device 200 contains a fibrillated heat treated polymer membrane configured as individual discs 240 stacked upon each other to form a stacked membrane assembly 220. The fibrillated heat treated polymer membrane 240 may be positioned in a stacked configuration by simply laying the fibrillated heat treated polymer membrane discs 240 on top of each other. Alternatively, the fibrillated heat treated polymer membrane discs 240 may be stacked and subsequently laminated together with heat and/or pressure or other conventional methods. It is to be appreciated that the stacked membrane assembly 240 described herein is with respect to fibrillated heat treated polymer membrane discs for ease of explanation. The fibrillated heat treated polymer membrane formed in their geometric shape(s) and/or non-geometric shape(s) are considered to be within the purview of the disclosure.

The chromatography device 200 includes at least one upper intermediate material(s) 260 positioned at the top of the stacked membrane assembly and at least one lower intermediate material(s) 280 positioned at the bottom of the stacked membrane assembly 220. The upper and lower intermediate material(s) 260, 280, respectively, may be the same or different. Similar to the wound membrane assembly discussed above, the intermediate material(s) 260, 280 used to form the stacked membrane assembly 220 is not particularly limiting so long as the aqueous mixture is able to flow therethrough. Non-limiting examples of suitable intermediate materials include, but are not limited to, a porous fluoropolymer film or a porous non-fluoropolymer film (*e.g*., a porous polypropylene or other porous polyolefin film), a porous non-woven material, or a porous woven material.

The stacked membrane assembly 220 may be disposed within a housing 250 having an inlet cap 265 and an outlet end cap 275 disposed at opposite ends of the housing 250. In some embodiments, the housing 250 is cylindrical, although any geometry that is capable of housing the stacked membrane assembly and achieving a desired dynamic binding capacity is considered to be within the purview of this disclosure. In some embodiments, the intermediate material(s) 260, 280, the housing 250, the inlet cap 265, and the outlet cap 275 may be formed of a thermoplastic polymer such as polypropylene, polyethylene, or other polyolefins. Alternatively, one or both of the intermediate material(s) 260, 280 may be formed of an inorganic or metallic material, so long as the porous intermediate material(s) 260, 280 do not hinder the operation of the chromatography device.

The fibrillated heat treated polymer membranes 240 in the stacked membrane assembly 220 may be adhered to the housing 250 at the inner walls of the housing 250 via any conventional process (*e.g*., melt sealing or use of a sealant) that prevents flow between the periphery of the fibrillated heat treated polymer membranes 240 and the housing 250. The inlet cap 265 and the outlet cap 275 may be sealed to the housing 250 by a similar or identical process. The inlet cap and the outlet cap 265, 275 includes an inlet 280 and an outlet 285, respectively, to permit the flow of an aqueous mixture through the affinity chromatography device 200. Specifically, the inlet cap 265 permits fluid flow of the aqueous mixture into the housing 250 and the outlet cap 285 permits fluid flow of the aqueous mixture out of the housing 250. In use, the aqueous mixture flows sequentially through the intermediate material(s) 260, though the fibrillated heat treated polymer membranes 240 forming the stacked membrane assembly 220, and though the intermediate material(s) 280. As the aqueous mixture is passed through the chromatography device 200, the affinity ligand reversibly binds to the targeted molecule (e.g., a nucleic acid or viral vector), thereby effectively removing it from the aqueous mixture. The targeted molecule may be removed from the affinity ligand, for example, by passing a fluid that has a lower pH through the device, or by any manner known by those of ordinary skill in the art to remove a bound targeted molecule, such as, for example, a nucleic acid or a viral vector.

The total number of fibrillated heat treated polymer membranes present in the stacked membrane assembly is not particularly limited, and depends on the desired end use and/or desired mass transit flow within the membrane assembly. The stacked membrane assembly may include 2, 3, 4, 5, 6, 7, 8, 9, 10, 11, 12, 13, 14, 15, 16, 17, 18, 19, or 20 (or more) total polymer membranes. It is to be appreciated that hundreds or even thousands of polymer membranes may be present in the stacked membrane assembly. In addition, the fibrillated heat treated polymer membranes present in the stacked membrane assembly may have a thickness from about 1 micron to about 10,000 microns, from about 100 microns to about 5,000 microns, from about 500 microns to about 3,000 microns, or from about 650 microns to about 1,000 microns. As used herein, the term "thickness" is the direction of the fibrillated heat treated polymer membrane normal to the length area of the fibrillated heat treated polymer membrane.

The fibrillated heat treated polymer membranes in both the wound membrane assembly and the stacked membrane assembly contain inorganic particles having a spherical and/or inorganic particles having an irregular shape. As used herein, the term "spherical" is meant to denote that the inorganic particle has a round or nearly round shape where the distance from the center of the inorganic particle to the outer edge of the particle at any point is the same or nearly the same distance. As used herein, the term "irregular" is meant to denote an organic particle that has a jagged or otherwise non-spherical shape. In some embodiments, the inorganic particles have a particle size distribution that has a D90/D10 less than or equal to 3, less than or equal to 2.5, less than or equal to 2, less than or equal to 1.5, or less than or equal to 1. The inorganic particles have a nominal particle size that may be about 5 microns, about 10 microns, about 15 microns, about 20 microns, and combinations and blends thereof. In some embodiments, the inorganic particles are polydisperse.

In some embodiments, the fibrillated heat treated polymer membrane includes more than one nominal particle size and/or more than one type of inorganic particle within the fibrillated heat treated polymer membrane. The fibrillated heat treated polymer membrane may contain from about 10 mass% fibrillated heat treated polymer membrane to about 90 mass% inorganic particles, from about 15 mass% fibrillated heat treated polymer membrane to about 85 mass% inorganic particles, from about 20 mass% fibrillated heat treated polymer membrane to about 80 mass% inorganic particles, from about 30 mass% fibrillated heat treated polymer membrane to about 70 mass% inorganic particles, from about 35 mass% fibrillated heat treated polymer membrane to about 65 mass% inorganic particles, from about 40 mass% fibrillated heat treated polymer membrane to about 60 mass % inorganic particles, from about 45 mass% fibrillated heat treated polymer membrane to about 55 mass% inorganic particles, or from about 50 mass% fibrillated heat treated polymer membrane to about 50 mass% inorganic particles. Non-limiting examples of suitable inorganic particles include silica, zeolites, hydroxyapatite, metal oxides, and combinations thereof. Additionally, the inorganic particles may be either solid or porous. The affinity chromatography devices described herein have a hydraulic permeability from about 200 (X 10⁻¹²cm²) to about 700 (X 10⁻¹² cm²), from about 250 (X 10⁻¹² cm²) to about 700 (X 10⁻¹² cm²), from about 300 (X 10⁻¹² cm²) to about 650 (X 10⁻¹² cm²), from about 350 (X 10⁻¹² cm²) to about 600 (X 10⁻¹² cm²), from about 400 (X 10⁻¹² cm²) to about 600 (X 10⁻¹² cm²), from about 400 (X 10⁻¹² cm²) to about 550 (X 10⁻¹² cm²), from about 450 (X 10⁻¹² cm²) to about 550 (X 10⁻¹² cm²), from about 300 (X 10⁻¹² cm²) to about 500 (X 10⁻¹² cm²), from about 350 (X 10⁻¹² cm²) to about 500 (X 10⁻¹² cm²), or from about 400 (X 10⁻¹² cm²) to about
500 (X 10⁻¹²cm²).

In at least one embodiment, the fibrillated heat treated polymer membrane contains a blend of inorganic particles having different nominal particle sizes. For example, the fibrillated heat treated polymer membrane may include a 90:10 mixture of a first nominal particle size (e.g., 5 microns) and a second nominal particle size (*e.g*., 20 microns) of the same or different inorganic particle. The blend of inorganic particles within the fibrillated heat treated polymer membrane may be any blend, such as, for example, a blend from 10:90 to 90:10, a blend from 30:70 to 70:30, a blend from 60:40 to 40:60, a blend from 25:75 to 25:70, a blend from 20:80 to 80:20, or a 50:50 blend. In one embodiment, the inorganic particles have a spherical and/or irregular shape and include 10 micron inorganic particles and 20 micron inorganic particles in a blend from 10:90 to 90:10. In another embodiment, the inorganic particles have a spherical and/or irregular shape and include 5 micron inorganic particles and 10 micron inorganic particles in a blend from 10:90 to 90:10. In a further embodiment, the inorganic particles have a spherical and/or irregular shape and include 5 micron inorganic particles and 20 micron inorganic particles in a blend from 10:90 to 90:10.

In some embodiments, the fibrillated heat treated polymer membrane contains a single type of inorganic particle having a single nominal particle size, such as, for example, 20 microns. In some embodiments, the fibrillated heat treated polymer membrane may contain more than one type of inorganic particle and/or more than one nominal particle size. The fibrillated heat treated polymer membrane may contain at least first inorganic particles and second inorganic particles where the first inorganic particles are different from the second inorganic particles in nominal particle size and/or type. As one non-limiting example, a fibrillated heat treated polymer membrane may include a mixture of a first inorganic particle having one size (*e.g*., 20 microns) and a second inorganic particle having another size (*e.g*., 10 microns) of the same or different type of inorganic particle (e.g., porous silica). The mixture of inorganic particles within the fibrillated heat treated polymer membrane may be any mixture, such as a 50/50 blend, a 30/70 blend, a 60/40 blend, a 25/75, or a 20/80 blend.

In some embodiments, the affinity ligand is covalently bonded to the inorganic particles. In another embodiment, the affinity ligand is covalently bonded to the fibrillated heat treated polymer membrane. In a further embodiment, the affinity ligand may be bound to both the polymer membrane and the inorganic particle(s). The affinity ligand may be a protein, antibody, or polysaccharide, or oligonucleotide that reversibly binds to a targeted molecule. In one embodiment, the affinity ligand is a protein that reversibly binds, for example, to an Fc region of an antibody, an antibody fragment, an Fc fusion protein, or an antibody/drug conjugate. In another embodiment, the affinity ligand is an antibody, Protein L, or a polysaccharide that reversibly binds to a protein or a protein fragment to which it is specific. Affinity ligands for use in the affinity chromatography device include, but are not limited to, Protein A, Protein G, Protein L, human Fc receptor protein, polysaccharides, oligonucleotides, antibodies that specifically bind to other proteins, and combinations thereof. The affinity ligand may be native, recombinant, or synthetic. In some embodiments, the affinity ligand is a metal affinity ligand that reversibly binds to His-Tagged Proteins. In some embodiments, the affinity ligand may be an antibody or a polysaccharide that reversibly binds to a viral vector for which it is specific. In some embodiments, the affinity ligand is an oligonucleotide that specifically binds to an mRNA for which is it specific. In some embodiments, the oligonucleotide may be an oligo T, an oligo T20, an oligo DT, an oligo DT20, and combinations thereof.

In at least one embodiment, the fibrillated heat treated polymer membrane is a fibrillated (*e.g*., an expanded) polytetrafluoroethylene (ePTFE) membrane. Expanded polytetrafluoroethylene (ePTFE) membranes prepared in accordance with the methods described in U.S. Patent No. 7,306,729 to Bacino et al., U.S. Patent No. 3,953,566 to Gore, U.S. Patent No. 5,476,589 to Bacino, or U.S. Patent No. 5,183,545 to Branca et al. may be used herein. Further, the fibrillated heat treated polymer membrane may be rendered hydrophilic (e.g., water-wettable) using known methods in the art, such as, but not limited to, the method disclosed in U.S. Patent No. 4,113,912 to Okita, et al. A coating that effectively binds to a ligand, such as described in U.S. Patent No. 5,897,955 to Drumheller, U.S. Patent No. 5,914,182 to Drumheller, or U.S. Patent No. 8,591,932 to Drumheller may be applied to the fibrillated heat treated polymer membrane.

A fibrillated fluoropolymer membrane may also include a polymer material including a functional tetrafluoroethylene (TFE) copolymer membrane where the functional TFE copolymer material includes a functional copolymer of TFE and PSVE (perfluorosulfonyl vinyl ether), or TFE with another suitable functional monomer, such as, but not limited to, vinylidene fluoride (VDF), vinyl acetate, or vinyl alcohol.

It is to be understood that throughout the application, the term "PTFE" is meant to include not only polytetrafluoroethylene, but also expanded (or fibrillated) PTFE, expanded (or fibrillated) modified PTFE, and expanded (or fibrillated) copolymers of PTFE, such as described in U.S. Patent No. 5,708,044 to Branca, U.S. Patent No. 6,541,589 to Baillie, U.S. Patent No. 7,531,611 to Sabol et al., U.S. Patent No. 8,637,144 to Ford, and U.S. Patent No. 9,139,669 to Xu, et al.

Also, the fibrillated polymer membrane may be, for example, a fibrillatable polyolefin membrane (*e.g*. a fibrillated (or expanded) polyethylene membrane).

The intermediate material(s) may be a fluoropolymer film or a non-fluoropolymer film (*e.g*., polyethylene, expanded polyethylene, or other polyolefin film). Additionally, the intermediate film may be porous. In some embodiments, the intermediate film is a thermoplastic or thermoset polymer film.

Advantageously, the chromatography device may be used multiple times. Additionally, the chromatography device may be cleaned with a cleaning solution (*e.g*. sodium hydroxide, phosphoric acid, citric acid, ethanol, and the like) after each separation process or after multiple separation processes and reused.

The chromatography devices may be used multiple times without losing substantial dynamic binding capacity. Specifically, the chromatography devices may be cleaned with a cleaning solution (e.g. sodium hydroxide or a caustic solution) after each separation process and reused. Although embodiments of the wound membrane assembly 110 and stacked membrane assembly 220 are described herein, it is to be appreciated that any number of fibrillated heat treated polymer membranes as well as any and all combinations of types of fibrillated heat treated polymer membranes, types of inorganic particles, sizes of inorganic particles, and orientations of the fibrillated heat treated polymer membrane(s) within the membrane assemblies 110, 220 are within the scope of this disclosure. Also, some or all of the fibrillated heat treated polymer membranes may vary in composition, thickness, permeability, etc. from each other.

In some embodiments, the affinity chromatography devices described herein have a dynamic binding capacity (DBC) greater than 35 mg/ml at a residence time of 20 seconds. In addition, the affinity chromatography devices have a cycling durability of at least 100 cycles without exceeding an operating pressure of 0.3 MPa. Also, in some embodiments, the affinity chromatography devices have a particle size distribution has a D90/D10 less than or equal to 3.

The chromatography devices described herein and components thereof can be fabricated using various processes. In some embodiments, injection molding may be used to fabricate the chromatography components provided herein. Other suitable processes can include, but are not limited to, extrusion, compression molding, solvent casting, and combinations thereof. Embodiments employing two fibrillated heat treated polymer membranes that are co-expanded to produce a composite membrane assembly is also considered to be within the purview of the disclosure. Such a composite membrane assembly may contain two (or more) layers of fibrillated heat treated polymer membranes that may be co-extruded or integrated together.

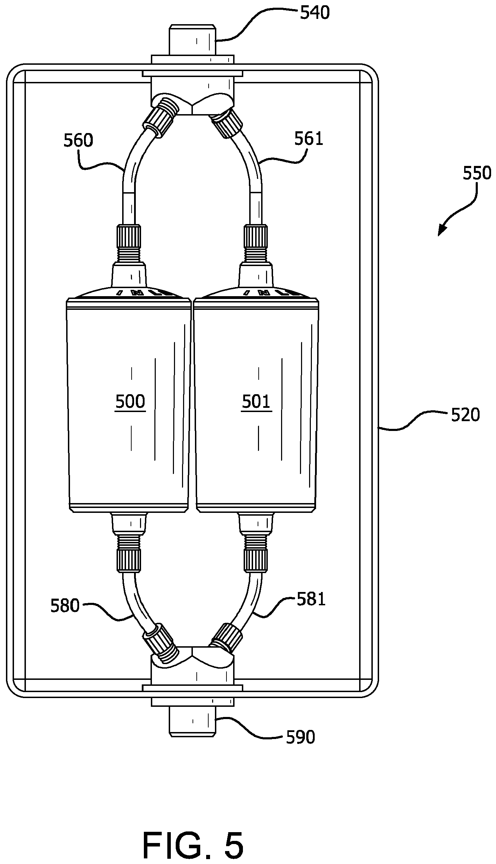

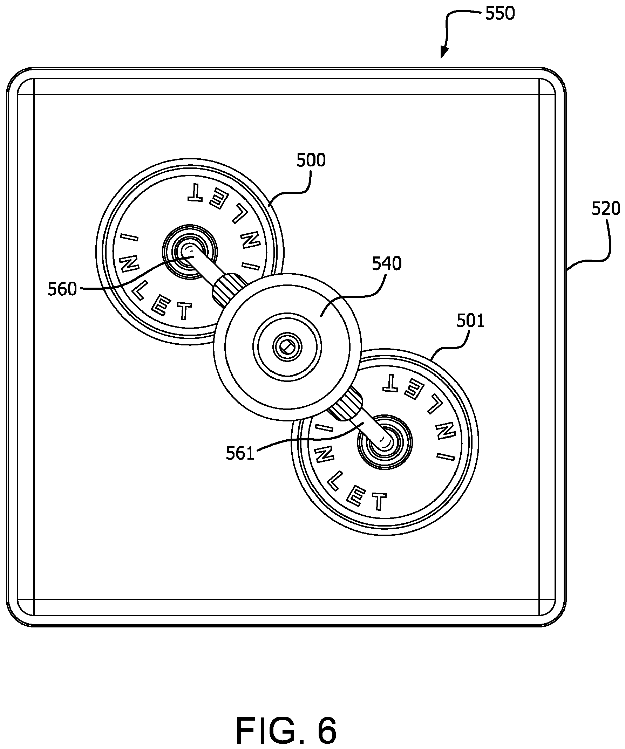

In some embodiments, the affinity chromatography devices described herein utilized in a dual manifold 550 with affinity chromatography devices 500, 501 arranged in a parallel configuration, such as is generally depicted in FIG. 5. It is to be appreciated that the affinity chromatography devices depicted in FIGS. 5-10 may include a stacked membrane assembly, a wound membrane assembly, or a combination thereof. As shown, an aqueous mixture flows through a main tube 520 to a distribution element 540. The distribution element 540 is not particularly limiting so long as it divides the flow of the aqueous mixture coming from the main tube 520 into at least two inlet tubes 560, 561. The split aqueous mixture in inlet tubes 560, 561 flows into chromatography devices 500, 501, where the targeted protein or antibody is captured. An aqueous solution (i.e., the aqueous mixture minus the targeted protein or antibody captured by the affinity ligand) flows out of the chromatography devices 500, 501 through outlet tubes 580, 581, respectively. The aqueous solution in outlet tubes 580, 581 are combined in distribution element 590 and reconstituted into a single aqueous solution that flows into tube 595. A top view of the dual manifold 550 containing the parallel affinity chromatography devices 500, 501 is depicted in FIG. 6. In some embodiments, the manifold 550 is positioned within a housing 520.

It is to be appreciated that two chromatography devices 500, 501 are shown in FIGS. 5 and 6 for illustration only and a plurality (i.e. three or more) chromatography devices described herein may be utilized in a manifold in a parallel configuration so long as there is a similar distribution of flow and resistance across the chromatography devices. This similarity across the affinity chromatography devices allows for scalability of device volume and performance. The affinity chromatography devices utilized in the manifold (e.g., dual, quad, etc.) may be the same or different from each other. In addition, the affinity chromatography devices may be dropped into a parallel configuration system without any changes or additions to the manifold 550.

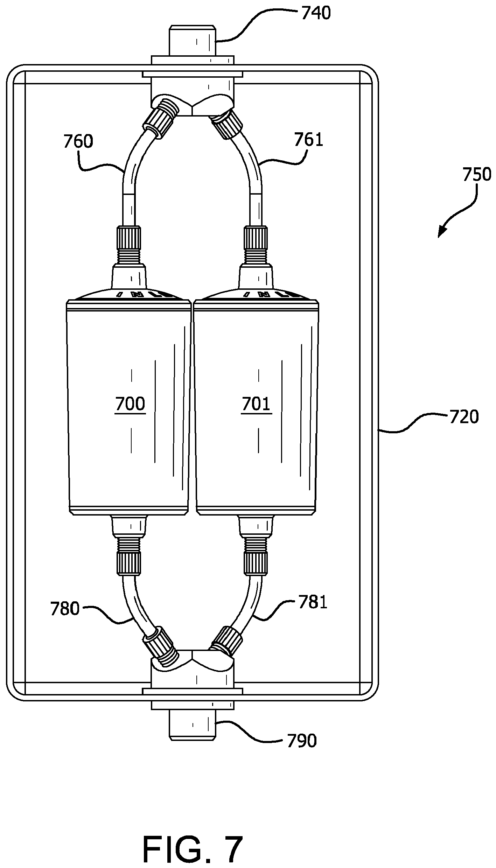

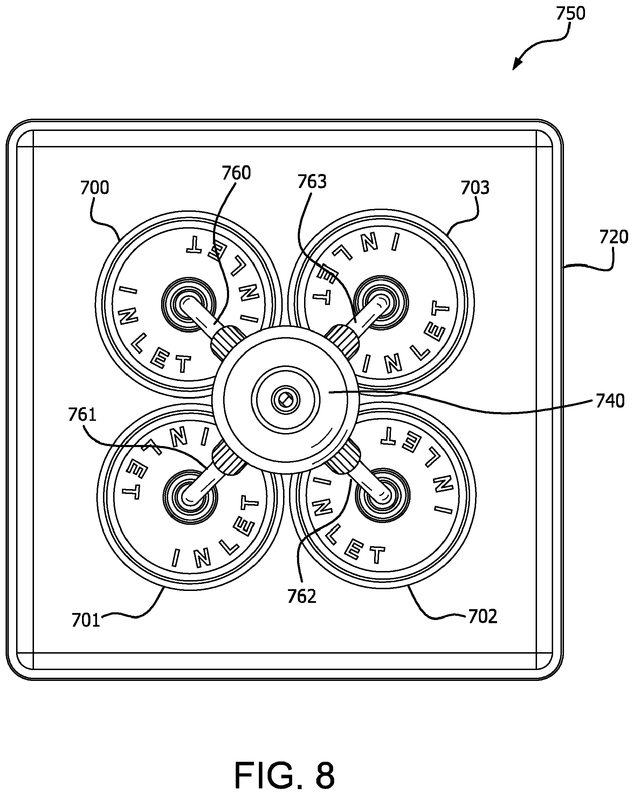

An example of a manifold containing a plurality of chromatography devices as described herein is a quad manifold depicted in FIG. 7. A top view of this quad manifold 750 is shown in FIG. 8. Similar to the dual manifold depicted in FIGS. 5 and 6, an aqueous mixture flows into a distribution element 740. The distribution element 740 divides the flow of an aqueous mixture into inlet tubes 760, 761, 762, and 763. The split aqueous mixture in inlet tubes 760, 761, 762, and 763 flow into the four chromatography devices 700, 701, 702, 703, respectively, where the targeted molecule is captured. An aqueous solution flows out of each of the chromatography devices 700, 701, 702, and 703 through outlet tubes 780, 781, 782, and 783, respectively. The aqueous solution in outlet tubes 780, 781, 782, and 783 are combined in a distribution element 790 and reconstituted into a single aqueous solution. In some embodiments, the quad manifold 750 may be positioned within a housing 720.

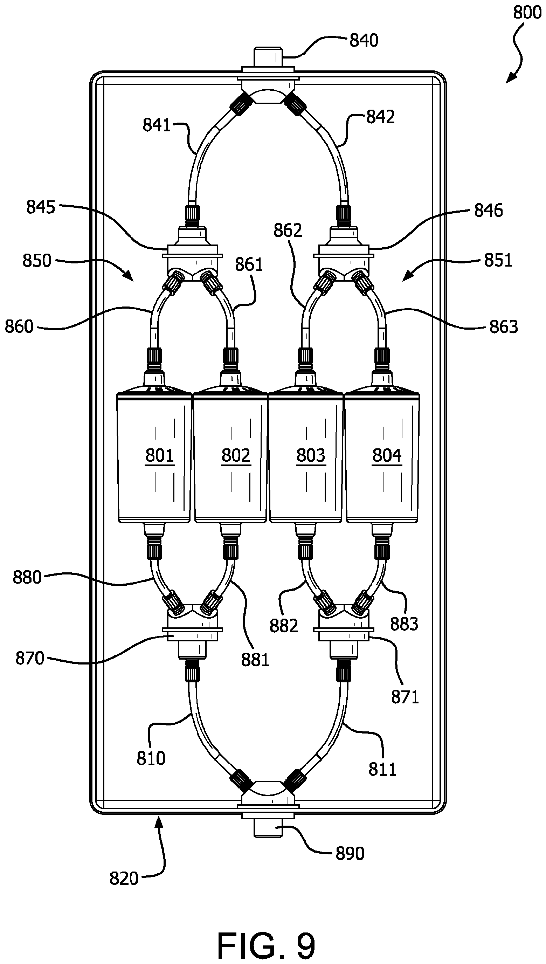

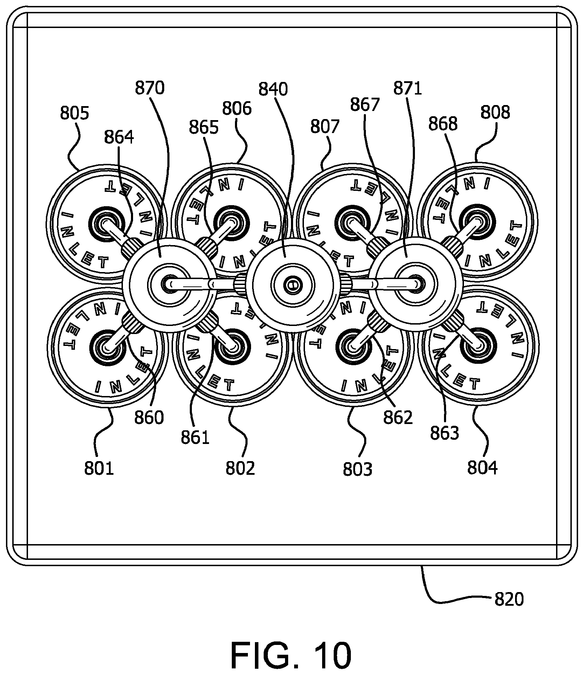

FIG. 9 depicts a device 800 containing two manifolds 850,851 in a parallel configuration. A top view of the device 800 is depicted in FIG. 10. The manifolds 850, 851 each contain four affinity chromatography devices, of which, two affinity chromatography devices 801, 802, 803, 804 of each manifold 850, 851 is depicted in FIG. 9. The ability to utilize at least two manifolds in parallel advantageously allows for an increase in volume capacity while utilizing the chromatography devices described herein. In other words, the device 800 eliminates the need to move to a chromatography device that is larger in volume. In addition, placing the manifolds in parallel, such as is depicted in FIG. 9, reduces concerns of over pressurizing the device 800.

In use, an aqueous mixture flows into a distribution element 840. The distribution element 840 divides the flow of an aqueous mixture into two distribution tubes 841, 842. The split aqueous mixture in distribution tubes 841, 842 is then further divided by distribution elements 851, 852 into inlet tubes. In the embodiment depicted in FIG. 9, of the four inlet tubes of manifold 850, inlet tubes 860, 861 are depicted. Similarly, of the four inlet tubes of manifold 851, inlet tubes 862, 863 are depicted. It is to be appreciated that the remaining inlet tubes 864, 865, 866, 867 are hidden behind inlet tubes 860, 861, 862, 863 in FIG. 9. The aqueous mixture in the inlet tubes of the first and second manifold 850, 851 flow into the affinity chromatography devices. It is to be appreciated that in manifold 850, affinity chromatography devices 801, 802, are depicted and in manifold 851, affinity chromatography devices 803, 804 are depicted. The remaining chromatography devices 805, 806, 807, 808 are hidden behind affinity chromatography devices 800, 801, 802, 803 in FIG. 9. The targeted molecule is captured in the affinity chromatography devices.

An aqueous solution flows out of each of the chromatography devices through outlet tubes. In FIG. 9, outlet tubes 880, 881 of manifold 850 and outlet tubes 882, 883 of manifold 851 are depicted. It is to be appreciated that the remaining outlet tubes are hidden behind outlet tubes 880, 881, 882, 883 in FIG. 9. The aqueous solution in the outlet tubes are combined in distribution element 870 and distribution element 871. The combined solution then flows from the distribution elements 870, 871 into collection tubes 810, 811. The aqueous solution in collection tubes 810, 811 are combined in distribution element 890 and reconstituted into a single aqueous solution. The first manifold 850 and the second manifold 851 may be enclosed within a housing 820.

In some embodiments, the affinity chromatography devices within the manifold(s) and/or the manifold(s) themselves (e.g. a dual manifold (FIG. 5), quad manifold (FIG. 7)), and/or manifolds in a parallel configuration (FIG. 9) may be contained within a housing. For instance, there may be a first housing surrounding the chromatography devices in the manifold. Thus, in a dual manifold, the first housing surrounds the two affinity chromatography devices. In connection thereto, there may be a second housing that surrounds the manifold (as well as the first housing surrounding the chromatography devices). In other embodiments, only the chromatography devices in the manifold are surrounded by a housing. In further embodiments, the manifold(s) and the affinity chromatography devices may be housed in a single housing (*e.g.*, the chromatography devices contained within the manifold(s) are not separately contained in a housing). The material forming a housing is not particularly limiting. Non-limiting examples of suitable materials include, but are not limited to, polyurethane, stainless steel, polypropylene, acrylonitrile butadiene styrene (ABS), polyethylene terephthalate (PET), polyether ether ketone (PEEK), cyclic olefin copolymer (COC), and polyethylene terephthalate glycol (PETG). Additionally, the shape of the housing unit is not limiting, and may take any form so long as the form encapsulates the affinity chromatography devices and/or the manifold(s).

In some embodiments, the present disclosure is directed to an affinity chromatography device that removes a targeted substance (e.g., nucleic acid or viral vector) from an aqueous mixture such as a biological sample. In some embodiments, the targeted substance is mRNA or adeno-associated virus. In at least one embodiment, the affinity chromatography device includes a fibrillated heat treated polymer membrane that contains therein inorganic particles having a spherical or irregular shape and a nominal particle size from about 5 microns to about 20 microns. The particle size distribution has a D90/D10 less than or equal to 3 and at least one of the fibrillated heat treated polymer membrane and the inorganic particles has covalently bonded thereto a ligand (e.g., oligonucleotide or polysaccharide) that reversibly binds to the targeted substance (e.g., nucleic acid or viral vector) within an aqueous mixture such as a biological sample. The affinity chromatography device may further include a fluid inlet and a fluid outlet fluidly connected to the fluid inlet. Additionally, the affinity chromatography device may include a housing member encompassing the fluid inlet, the fluid outlet and the fibrillated heat treated polymer membrane.

The invention of this application has been described above both generically and with regard to specific embodiments. It will be apparent to those skilled in the art that various modifications and variations can be made in the embodiments without departing from the scope of the disclosure. Thus, it is intended that the embodiments cover the modifications and variations of this invention provided they come within the scope of the appended claims and their equivalents.

## Claims

1. An article comprising:
an affinity chromatography device including:
a fluid inlet;
a fluid outlet fluidly connected to the fluid inlet;
a fibrillated heat treated polymer membrane positioned between the fluid inlet and fluid outlet and containing therein inorganic particles and a nominal particle size; and
a housing encompassing the fluid inlet, the fluid outlet and the fibrillated heat treated polymer membrane,
wherein at least one of the fibrillated heat treated polymer membrane and the inorganic particles has covalently bonded thereto an affinity ligand selected from a polysaccharide or an oligosaccharide that reversibly binds to a viral vector.

2. The article of claim 1, wherein the viral vector is an adeno-associated virus.

3. The article of any of claims 1 and 2, wherein the nominal particle size is selected from about 0.1 microns, about 0.5 microns, about 1.0 micron, about 5 microns, about 10 microns, about 15 microns, about 20 microns, about 25 microns, and combinations thereof.

4. The article of any one of the preceding claims, wherein the inorganic particles have a spherical shape, an irregular shape, or a combination thereof; and optionally
wherein the inorganic particles are selected from silica, zeolites, hydroxyapatite, metal oxides and combinations thereof.

5. The article of any one of the preceding claims, wherein the fibrillated heat treated polymer membrane has a wound configuration or a stacked configuration.

6. The article of any one of the preceding claims, wherein the fibrillated heat treated polymer membrane comprises a fibrillated polytetrafluoroethylene membrane, a fibrillated modified polytetrafluoroethylene membrane, a fibrillated tetrafluoroethylene copolymer membrane, or a fibrillated polyethylene membrane.

7. The article of any one of the preceding claims, wherein the affinity ligand is selected from Protein A, Protein G, Protein L, human Fc receptor protein, antibodies, polysaccharides, oligonucleotides, and combinations thereof.

8. The article of any one of the preceding claims, wherein the nominal particle size is selected from about 5 microns, about 10 microns, about 15 microns, about 20 microns, and combinations thereof.

9. The article of any one of the preceding claims, wherein the inorganic particles are spherical particles and have a nominal particle size from about 5 microns to about 20 microns, and wherein a particle size distribution has a D90/D10 less than or equal to 3.

10. The article of any one of the preceding claims, comprising a dynamic binding capacity (DBC) of at least 35 mg/ml at a residence time of 20 seconds.

11. The article of any one of the preceding claims, comprising a cycling durability of at least 100 cycles at an operating pressure less than 0.3 MPa.

12. The article of any one of the preceding claims, wherein an inner intermediate material is circumferentially positioned on an outer surface of a core and wherein the fibrillated heat treated polymer membrane is circumferentially positioned on the inner intermediate material; and optionally
including an outer intermediate material circumferentially positioned on the heat treated fibrillated polymer membrane; and optionally
wherein the inner intermediate material and the outer intermediate material are selected from a porous fluoropolymer film, a porous non-fluoropolymer film, a porous non-woven material and a porous woven material.

13. A manifold comprising at least two of the affinity chromatography devices of any one of the preceding claims arranged in a parallel configuration; and optionally
wherein the manifold is contained within a housing; or wherein the first manifold and the second manifold are enclosed within a housing.

14. A device comprising a first manifold and a second manifold in a parallel configuration, wherein each of the first manifold and the second manifold includes at least two of the affinity chromatography devices of any one of the preceding claims.

15. An article comprising:
a fluid inlet;
a fluid outlet;
a fibrillated heat treated polymer membrane containing therein inorganic particles having a nominal particle size;
a housing surrounding the fluid inlet, the fluid outlet, and the fibrillated heat treated polymer membrane;
a first end cap positioned at a first end of the housing; and
a second end cap positioned at a second end of the housing,
wherein at least one of the fibrillated heat treated polymer membrane and the inorganic particles has covalently bonded thereto an oligonucleotide that reversibly binds to a nucleic acid.

16. The article of claim 15, wherein the nucleic acid is mRNA.

17. The article of any one of claims 15 and 16, wherein the oligonucleotide is selected from oligo T, oligo T20, oligo DT, oligo DT20 and combinations thereof.

18. The article of any one of claims 15 to 17, wherein the inorganic particles have a spherical shape, an irregular shape, or a combination thereof; and optionally
wherein the inorganic particles are selected from silica, zeolites, hydroxyapatite, metal oxides and combinations thereof.

19. The article of any one of claims 15 to 18, wherein the fibrillated heat treated polymer membrane includes at least one of a fibrillated heat treated polytetrafluoroethylene membrane, a fibrillated heat treated modified polytetrafluoroethylene membrane, a fibrillated heat treated tetrafluoroethylene copolymer membrane, or a fibrillated heat treated polyethylene membrane.

20. The article of any one of claims 15 to 19, wherein the nominal particle size is selected from about 5 microns, about 10 microns, about 15 microns, about 20 microns, and combinations thereof.

21. The article of any one of claims 15 to 20, wherein the fibrillated polymer membrane has a wound configuration or a stacked configuration.

22. A manifold comprising at least two of the articles of any one of claims 15 to 21 arranged in a parallel configuration; and optionally
wherein the manifold is enclosed within a housing.

23. A device comprising a first manifold and a second manifold in a parallel configuration, wherein each of the first manifold and the second manifold includes at least two of the articles of any one of claims 15 to 22; and optionally
wherein the first manifold and the second manifold are enclosed within a housing.
